(19)

Europäisches
Patentamt
European
Patent Office
Office européen
des brevets

(11) **EP 2 843 621 A1**

(12) **EUROPEAN PATENT APPLICATION**

(43) Date of publication:
**04.03.2015 Bulletin 2015/10**

(51) Int Cl.:
*G06T 7/20* (2006.01)    *G06K 9/00* (2006.01)

(21) Application number: **13181662.1**

(22) Date of filing: **26.08.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Max-Planck-Gesellschaft zur
Förderung
der Wissenschaften e.V.
80539 München (DE)**

(72) Inventors:
• **Black, Michael
72076 Tuebingen (DE)**

• **Loper, Matthew
72076 Tuebingen (DE)**
• **Romero, Javier
72070 Tuebingen (DE)**
• **Zuffi, Silvia
72070 Tuebingen (DE)**

(74) Representative: **Baldus, Oliver
Patentanwälte Schwarz & Baldus
Hermann-Schmidstr. 10
80336 München (DE)**

(54) **Human pose calculation from optical flow data**

(57)    The present invention refers to a method, system and product for estimating human pose based on optical flow data. After providing the image data sequence (1) containing the multipart object, optical flow data are computed (2). Based on the optical flow data a segmentation of the image into object parts is computed. Thereafter, joints between object parts and/or the location of object parts are detected from the segmentation. Finally, the movement of the object parts is tracked.

## Fig. 1

EP 2 843 621 A1

**Description**

FIELD OF THE INVENTION

The present invention is directed towards the domain of image processing and particularly relates to the automatic tracking of movement of an object, for example a human body, in an image sequence.

Pose estimation or motion capture is a fundamental problem in computer vision and computer graphics with many different applications inter alia like medical imaging, in particular image registration, character animation, robotics, gaming, surveillance, and video compression. Motion capture is also a major concern in visually guided navigation of autonomous vehicles.

Estimating a displacement field for consecutive images from an image sequence is among the central computational challenges in computer vision. It arises whenever one aims to identify correspondences between points in pairs of images. Examples include motion estimation, tracking, and medical multi-modal registration. The resulting dense correspondence between pairs of points in either image can subsequently be used for structure-from-motion algorithms, for object recognition for example in robotics, and other technical tasks. The development of appropriate cost functionals and minimization algorithms for estimating displacement or optic flow fields has received much attention in the computer vision community. Incorrect correspondence estimates (based on matching wrong image points) are likely to seriously deteriorate the subsequent motion estimation process, which in turn may lead to severe errors in data processing (for example in medical imaging or in compression errors). These errors have to be diminished or avoided.

Human pose estimation from monocular video has been extensively studied but currently there are no widely available and reliable solutions. The problem is challenging due to the dimensionality of human pose, the complexity of human motion, and the variability of human appearance in images due to clothing, lighting, camera view, and self-occlusion.

BRIEF DESCRIPTION OF RELATED ART

There is a huge literature on pose estimation in static images, video sequences, and using depth information from many sources. Here, the focus is on the two areas most closely related to the present invention:

1. Microsoft's Kinect and
2. articulated pose estimation from optical flow.

Ad 1 - The Kinect system:

The Microsoft Kinect system is explained in Shotton et al.. The Kinect hardware and software have been revolutionary. Kinect provides human motion capture from an inexpensive device in a person's home with sufficient accuracy for entertainment purposes. Furthermore, the methods show how pose estimation can be formulated and solved as a machine learning problem. While inexpensive and popular, range sensing devices like Kinect are still not widely deployed when compared with traditional video cameras. The Kinect algorithms work only on range data and therefore cannot be applied to archival data from television and films. Thus, a major drawback of the Kinect system is to be seen in that it fails for normal image sequences and requires depth images The use of range data is clearly important for the success of Kinect, but there are two possible reasons for this. First it provides direct observations of scene depth, removing the ambiguities inherent in the 2D projection of people onto the image plane. Second, and just as important, is that the range data simplifies the signal processing problem by removing the irrelevant effects of appearance and lighting while maintaining the important information about body structure.

Thus, the first type of systems use a specialized range sensor or range camera. The Kinect system is not directly applicable to flow data because optical flow vanishes in the absence of movement. The Kinect system relies on a combination of range data and good inference to achieve pose estimation. The range data helps to directly estimate shape while achieving invariance to appearance, while the inference leverages ensemble methods on a large training corpus. While relatively inexpensive, such a solution is not fully general. It does not apply to archival video sources and cannot be used with devices such as cell phones and laptops that are currently equipped only with a monocular video camera. Additionally, the Kinect's infrared illumination can be swamped by natural illumination.

Without range data, the problem of estimating pose directly from image data is daunting, and there has been extensive work on the problem using part-based models [11, 14, 15, 25, 39, 40]. Current methods however are brittle and do not achieve the reliability of a device like Kinect. Unfortunately, applying the Kinect-style algorithm to regular video frames is challenging due to the huge variability in human appearance. Thus a drawback of these state of the art systems is that the training for such a system would need to synthesize photo-realistic images of people in an effectively infinite variety of clothing and scenes. Moreover, the size of such a training set would be prohibitive for most, if not all, current systems.

Ad 2 - Articulated pose estimation from optical flow:

In terms of state-of-the-art in human pose from flow, the most relevant previous work is probably "Recognizing Action at a Distance" by Efros et al. [10]. Efros et al. go a step further and use optical flow patterns to estimate pose. They focus on low resolution people in video which makes the flow information limited and noisy. Consequently they treat the sequence of optical flow over time as a spatio-temporal pattern, which becomes a motion descriptor, used to query of a database for the nearest neighbor with a similar pattern and known 2D and 3D pose.

OBJECT OF THE INVENTION

There is a need to provide a pose estimation system which produces a high quality output and which is also applicable for archival video data or television clips. The system should be capable to identify specific objects and part thereof in an image and to determine each object's part position and orientation relative to a coordinate system. Further, the pose estimation system (as well as the method and the product) should be executable on a portable or hand-held electronic device (for example a mobile phone) and it should work for outdoor pictures and thus for instance with natural lightning and dynamic background, so that the pose estimation is computed on real images. Finally, the pose estimation should work for a multi-part object, taking into account the position differences of the parts.

SUMMARY OF THE INVENTION

The present invention refers to the computation of an object's pose of a multi-part object. Input signals are received from at least one (or a plurality of) optical flow sensor (s) (a vision sensor like a camera or a picture archive). A computer based instance or a chip is capable of receiving this input and measuring optical flow or visual motion. The output, thus, is a measurement based on optical flow. The output may be a signal, i.e. to control the display on a monitor or a graphical representation of an estimated multi-part object's pose with kinematic structures of the object's parts.
The present invention, in particular, relates to a method for automatically tracking the movement and estimating a pose of a multi-part object from successive frames of an image sequence or a video, comprising the steps of:

- Providing the image data sequence containing the multi-part object
- Computing optical flow data for the provided image data sequence
- Computing a segmentation of an image into object parts based on the optical flow data
- Detecting joints between object parts and/or the location of object parts from the segmentation
- Tracking the movement of the object parts.

According to a further aspect the present invention relates to a method for automatically estimating a pose of a multi-part object from successive frames of an image sequence or a video, comprising the steps of:

- Providing the image data sequence containing the multi-part object
- Computing optical flow data for the provided image data sequence
- Directly estimating joints and/or object part locations from the optical flow data
- Tracking the movement of the object parts.

The estimated pose and thus the output can then be used for several applications. First, to allow a robot to manipulate an object, interact with it or to avoid moving into the object. Second, to animate a computer graphics model for gaming or modeling purposes. Third, when applied to human pose, to compute natural poses and movement for the animation industry. Fourth, to render shootage of the object from novel viewpoints, e.g. videos of soccer matches from new perspectives. Moreover, it is possible to control a robot by physically interacting with a scaled model of it (by estimating the pose of the scaled model), or by directly demonstrating the movements (by estimating the pose of the person demonstrating the movements).
An advantage of the present pose estimation over state of the art systems is that the method according to present invention is much more local and modular, resulting in more scalability and faster execution, and that can be applied to normal cameras instead of range sensor devices.
With respect to the Efros et al. state of the art systems, as mentioned above in Efros et al., in these systems, the database query involves computing the similarity between every flow frame in the current sequence and every flow frame in the database of known poses. However, in this application every pixel is efficiently classified independently based on its optical flow and its neighbors. This results in two main advantages for the system described in this application.

First, the system described herein is much more efficient, since only O(Kn) operations for estimating the pose in a sequence of K frames with n pixels each need to be performed, while the state of the art system needs to perform O(KQn), where Q is the number of frames stored in the database (with Q»K). Second, since pixels are classified independently based on their optical flow neighborhoods instead of full sequences of images, present approach is more modular and much less training data are required. That is, while Efros et al. require to have very similar sequences of full body poses in the database, the present approach only requires similar posed limbs in a particular frame.

Various configurations of optical flow sensors and of electronic modules for automatically estimating a pose do exist. A preferred configuration is an image sensor chip connected to a processor programmed to run an optical flow algorithm. Another configuration uses a vision chip, which is an integrated circuit having both the image sensor and the processor on the same die, allowing for a compact implementation. In some cases the processing circuitry may be implemented using analog or mixed-signal circuits to enable fast optical flow computation using minimal current consumption. In this respect it has to be noted first, that execution time is (mostly) independent of training set size. Therefore, the present system can be more general without having a penalty in performance. Thus, the present system has the technical effect of faster performance (times). Second, the classification system can be parallelized in a graphics processing unit (GPU) (see "Implementing Decision Trees and Forests on a GPU" by Sharp et al.), achieving super-realtime performance (as reported by Shotton et al.). If computation of flow is also performed in GPU (as the current implementation does) a significant advantage in efficiency can be achieved, since data could stay in the GPU avoiding costly GPU->CPU communication (CPU: Central Processing Unit).

A most preferred implementation is in a field-programmable gate array (FPGA) or in an application-specific integrated circuit (ASIC) (see "An FPGA based high performance optical flow hardware design for computer vision applications" by Gultekin et al. for the flow computation and "Accelerating a Random Forest Classifier: Multi-Core, GP-GPU or FPGA" by Van Essen et al. and "Random decision tree body part recognition using FPGAs").

In an alternative embodiment of the present invention the method is implemented in an electronic device or module. It may be implemented in a graphics processing unit (GPU) as well.

The present method and system for estimating human pose from video only uses optical flow. The key insight is that dense optical flow can provide rich data about body parts and pose and that, like range data, is largely invariant to appearance (seize, clothing etc.). In experiments it has been demonstrated that body parts can be detected from dense flow using the same kind of approach used by the Microsoft Kinect. Since people are not visible in the flow field when they stop moving, a Kalman filter is used to propagate body part positions and velocities over time. These position estimates are further used to predict 2D body pose. Because no range sensor is required, the method estimates human pose from any monocular video source including hand-held phone cameras or archival video such as television programs. Additionally it works in outdoor lighting where Kinect fails. Since no proprietary hardware is needed, it can be much more widely deployed than Kinect; the method can be used by anyone with a video source.

In the following a short explanation of terms used within this application is given.

The method relates to automatically estimating a pose of a multi-part object from successive frames of an image sequence or a video. Pose estimation may thus be interpreted as tracking position and motion (or movement) of the parts of the multi-part object separately for each part, which may be human body parts or human hands or the like within a sequence of image frames. The combination of position and orientation is referred to as the pose of an object. The pose estimation according to a preferred embodiment of this invention is marker-less. However, principally, the invention may be implemented also in addition to a marker-based system.

The multi-part object primarily is an articulated object and may be construed as human body with different limbs in different sizes and different shapes and in different poses. The objects represented in the images, in particular the people may be male or female. The people may be represented as a realistic human being or as an artificial representation such as an avatar, which refers to graphical representation of a user or the user's character (i.e. in games). It may take either a three-dimensional form, as in games or virtual worlds, or a two-dimensional form as an icon. The multi-part object may also refer to a group or a set of different objects. Moreover, the multi-part object may be at least one human or animal hand, limb or face. According to a preferred embodiment, for each image of the image sequence (i.e. video etc.) the object is extracted from the background so that a sequence of multi-part source objects is generated. Then a comparison is processed in order to compare each of the objects with a reference object (for example generated by the model) and to compute matching errors.

According to an aspect of the present invention the positions of the joints and/or the part positions (locations) are indirectly deduced from the parts or from the segmentation. The detection of joints or the part location detection can happen directly in the step of segmentation.

The image data sequence may be a video sequence and may be provided as an archival video source or from television clips. The image data sequence may be provided from a monocular video camera or from a camera in a mobile phone or mobile electronic system (PDA or tablet pc etc.). The image data from which the pose of an object is to be determined can be either a single image, a stereo image pair, or an image sequence where, typically, the camera is moving with a known speed. The objects which are considered can be rather general, including a living being or body parts, e.g., a head or hands.

An essential difference to range data based system the method described here is based on optical flow data and not on range data. Generally, optical flow may be construed as displacement of corresponding two-dimensional image positions between successive frames of a video or image sequence. Optical flow may be construed as an approximation to image motion defined as the projection of velocities of 3D surface points onto the imaging plane of a visual sensor. Optical flow may be a useful image motion representation. For a more detailed explanation for the term "flow data" it is referred to S. Baker, D. Scharstein, J. Lewis, S. Roth, M. Black, and R. Szeliski. A database and evaluation methodology for optical flow. International Journal of Computer Vision, 92(1):1-31, 2011.

In contrast to flow data, the term "range data" refers to the per-pixel depth information detected by for example a Kinect system, where "depth" is distance from the camera plane to different parts of the scene. Just as the Kinect's color camera produces an array of color pixels, the Kinect's depth camera produces an array of depth pixels. The present invention does not use range images, but flow data. For the purpose of clarification, the range data are explained in order to show the differences to the present system. A range image may be generated by a set of techniques which are used to produce a 2D image showing the distance to points in a scene from a specific point, normally associated with some type of sensor device. The resulting image, the range image, has pixel values which correspond to the distance, e.g., brighter values mean shorter distance, or vice versa. If the sensor which is used to produce the range image is properly calibrated, the pixel values can be given directly in physical units such as centimeters and meters. The range sensor device (i.e. camera) which is used for producing the range image is sometimes referred to as a range camera. Range cameras can operate according to a number of different techniques, such as stereo triangulation, structured light or others. The present application does not use such a range camera.

According to a first embodiment the method uses the step of segmentation. Segmentation is based on a stochastic processing, in particular a pixel-based processing. The segmentation is based on optical flow and uses features in the flow field to predict the joints and/or the part locations probabilistically. Thus, the segmentation is probabilistic or is based on a stochastic discrimination method. The detection of joints and/or of object part locations is, then, based in the segmentation. The segmentation is computed independently in every pixel, based on their pixel neighborhood. In particular, the segmentation may be computed by using a regression forest as a statistical process for estimating the relationships among statistical relevant variables. According to a first embodiment, segmentation (only) uses optical flow. According to second embodiment, segmentation also uses other features, such as image color, texture and depth.

According to an alternative embodiment estimating or computing the segmentation of the object into parts altogether is avoided. So every pixel is processed to predict directly joint positions instead of predicting first a segmentation and then predict joints from the segmentation.

Unlike range data, flow vanishes in the absence of movement. That is why in this solution according to present application optical flow is exploited and computed in a dual manner:

    1. for predicting body pose and
    2. for tracking when the body pose prediction is not reliable.

Tracking the movement refers to detecting the displacement in the image frames independently. According to an aspect, tracking actually detects the displacement for the previously estimated joint positions (and not for all the pixels). The position and the movement are detected or estimated. Also in case there is no movement, this will be detected. Tracking uses the optical flow associated with the object parts to predict their motion. Tracking may use a temporal filter to smooth the estimated motions. The temporal filter may be a Kalman filter. Tracking the movement of each object part exploits the object part probabilities from the (probabilistic) segmentation of the image. Tracking position of each object part is performed by computing a matrix containing 2D centroids of the object parts in the image and tracking is performed independently for each object part centroid. This has the advantage that the pose estimation is very local and modular and thus may be applied for a multi-part object. Preferably, tracking and/or segmentation are executed on a per-pixel basis. In a preferred embodiment, the segmentation is executed on a per-pixel basis and, tracking is executed in a per-joint basis. This is due to the fact that tracking individual pixels through time is challenging, since individual pixels will eventually be hidden due to occlusions. Also, the motion estimation of individual pixels is less robust than the aggregated motion of a part.

The present invention considers the observation that optical flow provides similar benefits than range data (for example in the Kinect system of the state of the art), in particular with respect to the advantage of simplification of signal processing. In contrast to the use of range cameras in state of the art system (i.e. Kinect), the present application refers to a system that introduces a tracking post-processing of the body parts that exploits the complementary nature of pixel-classification and (lack) of optical flow data.

One of the unique features of present invention is the manner in which optical flow data are used and processed. In particular, first the method uses features in the flow field to predict locations of parts of a multi-part object. The position and motion of the respective parts of the multi-part object are predicted based on flow. Second, the pose is estimated based on a computation of the flow data, and detecting how all the parts of the multi-part object fit together into the complete object.

According to a preferred embodiment of the present invention the locations of the joints or the object parts locations are represented in 3D. Alternatively, the locations of the joints or the object parts may be represented in 2D.

According to a preferred embodiment of the present invention a 3D model is used to create training data for the segmentation. The 3D model may (also) be used to create training data for detecting joints or part locations. Thus, according to an aspect the present invention is model-based.

According to a preferred embodiment of the present invention the pose estimation method is learning-based. The method, thus, uses an artificial learning-based system to learn the mapping from 2D image features to pose transformation. A sufficiently large dataset of "training" images of the object, in different poses, sizes, clothing etc. may be presented to the system during a learning phase. Once the learning phase is completed, the system should be able to present an estimate of the object's pose given an image of the object. The decision tree is trained to estimate joint positions (instead of a segmentation).

According to a preferred embodiment of the present invention optical flow is computed in real time or offline.

According to a preferred embodiment of the present invention the method is extended for a 3D pose estimation. Estimating the object's 3D pose is based on the estimated 2D pose by using and processing a 3D training dataset.

A major advantage of the present invention over the Kinect system of the state of the art is that it is possible to provide and receive the image data sequence from an archive or from a memory and to use television signals as input signals.

Usually each pixel in the image is assigned to one of the categories "object" or "background". This assignment is used for pose estimation. In another preferred embodiment an initial segmentation of a scene, visualized in the image into object and background is provided together with the image data sequence.

The present invention further relates to a mobile device with an electronic module for executing the method for automatic pose estimation as described above.

The present invention further relates to an electronic module for automatically estimating a pose of an object from successive frames of an image sequence or a video, comprising:

- An input interface to a camera or an image or video archive for providing an image data sequence containing the object
- A pose estimation unit, which is adapted to compute optical flow data for the provided image data sequence
- A part detector, which is adapted to segment the image into a set of object parts and detect joints between respective object parts or detect the part locations based on the optical flow data provided by the pose estimation unit
- An estimator, which is adapted for estimating the object's pose by tracking movement of each object part of the set of parts using the optical flow of the respective part
- An output interface for providing an output, in particular the estimated pose of the multi-part object.

The electronic module may be integrated in a mobile device, particularly in a mobile phone, with a camera or in a camera.

Another aspect is to be seen in a computer readable medium according to accompanying claims. Further, the method may be implemented in software and/or in hardware.

BRIEF DESCRIPTION OF THE DRAWINGS

The figures illustrate principles of the invention according to specific embodiments. Thus, it is also possible to implement the invention in other embodiments, so that these figures are only to be construed as examples. Moreover, in the figures, like reference numerals designate corresponding modules or items throughout the different drawings.

Fig. 1 is a schematic drawing showing an overview of the pose estimation system according to a preferred embodiment of the present invention,

Fig. 2 is a schematic drawing showing another embodiment of an image acquisition device of the pose estimation system according to a preferred embodiment of the present invention,

Fig. 3 is a schematic drawing of an pose estimation unit according to a preferred embodiment of the present invention,

Fig. 4 is a schematic drawing of an pose estimation unit according to another preferred embodiment of the present invention,

Fig. 5 is a workflow of a method for pose estimation according to a preferred embodiment of the present invention,

Fig. 6a-Fig. 6d is a simplified representation of a data flow in a preferred embodiment: real images, optical flow, part segmentation and pose estimation, respectively,

Fig. 7 shows a set of training data used by the segmentation algorithm,

Fig. 8 is a visual representation which may serve as summary of the pose estimation method according to a preferred embodiment of the present invention,

Fig. 9 shows the two-dimensional regression between body parts to body joints,

Fig. 10 shows an exemplary representation of a smartphone flow capture and,

Fig. 11 shows an exemplary representation of flow capture, based on archival video data.

## DETAILED DESCRIPTION OF PREFERRED EMBODIMENTS

The present invention is described in more detail with respect to the accompanying drawings which show example embodiments of the present invention.

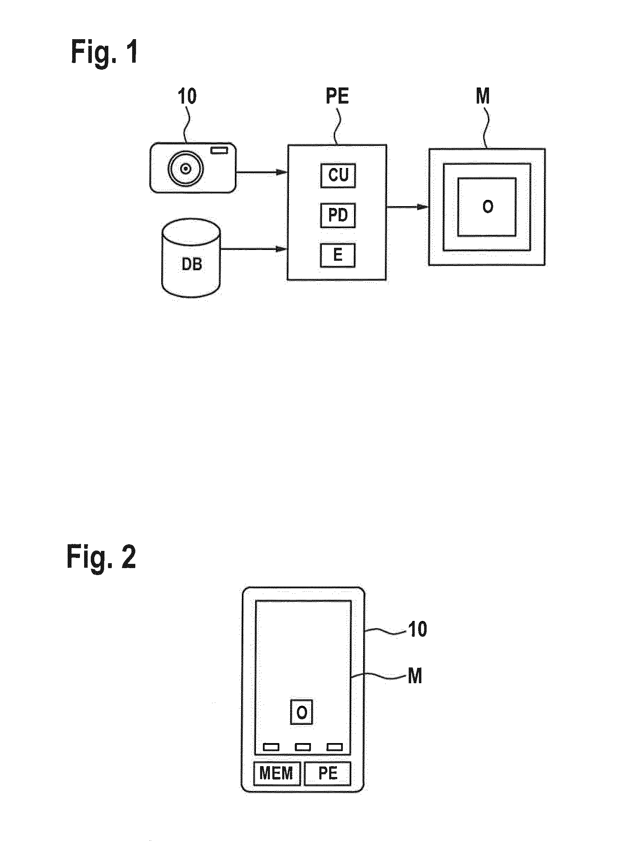

**Figure 1** shows a pose estimation system which is based on a camera 10 which serves as image acquisition device. The image data are forwarded to a pose estimation unit, which is depicted with reference numeral PE. The pose estimation unit PE itself may comprise a calculation unit CU, a part detector PD and an estimation unit E. The pose estimation unit PE may have data access to a database DB, which may be a central database. The pose estimation unit PE is adapted to automatically provide an output O, namely an estimated pose, based on an image data sequence which is provided by the camera 10. The output O may be forwarded to be displayed on a monitor M. The part detector PD is adapted to detect joints between object parts and/or the location of object parts, wherein the object (for example a human body or hand) is contained in the images of the image data sequence. The estimation unit E is adapted to estimate pose by tracking movement and position of the object's parts (for example the limbs) based on the flow data. The calculation unit CU is adapted to automatically compute the optical flow data for the provided image data sequence.

**Figure 2** shows another embodiment of the image acquisition device 10, being a smartphone with a camera. In an example embodiment the smartphone 10 may be equipped with a memory MEM and with an pose estimation unit PE. Further, the smartphone 10 may comprise the monitor M in order to display the output O. According to a preferred embodiment the monitor M is a separate external monitor, which may be controlled by the pose estimation unit PE. The pose estimation unit PE may be integrated into the smartphone or mobile device 10 or may be provided on an external separate instance in data exchange with the camera or smartphone 10 and with the monitor M.

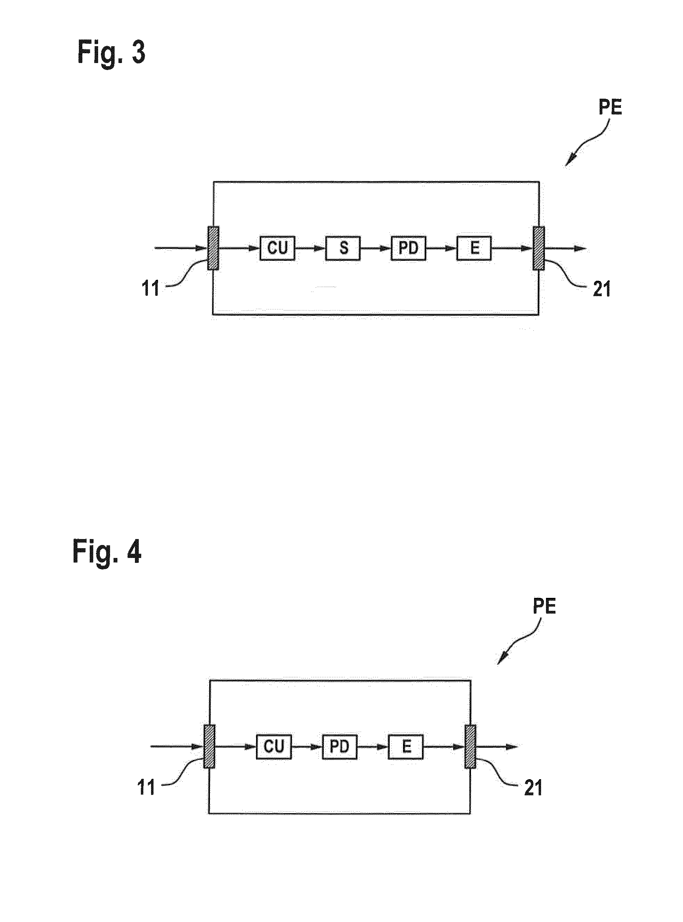

**Figure 3** shows a schematic drawing of the pose estimation unit PE. The pose estimation unit PE consists of an input interface 11 for receiving signals, provided by the image acquisition device 10 or from a picture archive which may be resident on a memory or a database DB. The pose estimation unit PE has an output interface 21 for providing the output O, which is the estimated pose of the multi-part object. In this embodiment the pose estimation unit PE comprises the calculation unit CU for computing the optical flow, the segmentation unit S which is adapted to automatically compute a segmentation of the image into object parts based on the optical flow data, provided by the calculation unit CU. Further, the pose estimation unit PE consists of the part detector PD and the estimation unit E, which generates and forwards the output O to the output interface 21 for further processing and/or display.

**Figure 4** shows the pose estimation unit PE according to another exemplary embodiment. In this example the pose estimation unit PE does not consist of a segmentation unit S, but only consists of the calculation unit CU, the part detector PD and the estimation unit E. In this case, the joints and/or the object's part locations are directly computed from the optical flow data, provided by the calculation unit CU.

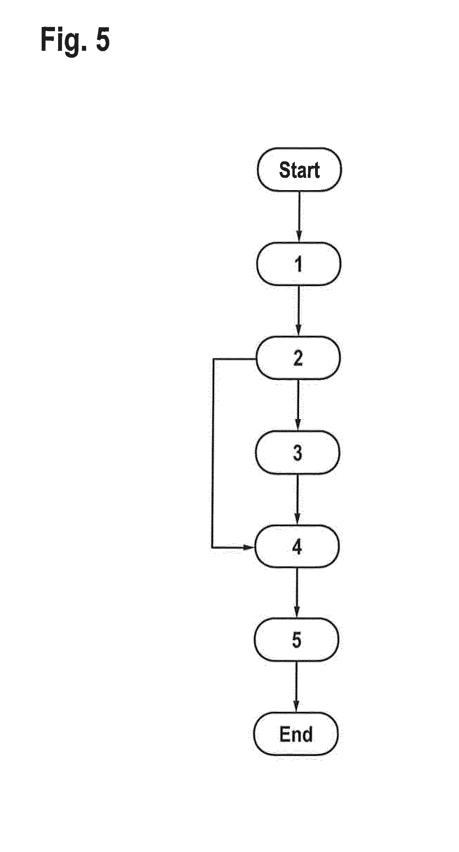

A typical processing is described below with respect to **Figure 5.** After starting the procedure, in **step 1** the image data sequence containing the multi-part object is provided from the camera or video handheld 10 via input interface 11.

In **step 2** the optical flow (data) is automatically computed for the provided image data sequence. The first step of the present method differs from the method of Shotton et al. [27], in that their depth training data have been replaced with optical flow data. Therefore, the present procedure deviates from [27] because the nature of optical flow is different from range data. In particular, unlike range, when the person stops moving the flow is zero. Consequently to know where the person is, the present method according to this application requires a temporal model to integrate information; [27] does not use a temporal model. The fact that here optical flow data is used, makes this temporal propagation quite elegant. When the flow goes to zero, it is deducible that the person is not moving, making the temporal propagation more accurate. Additionally, since depth is not directly recorded, in order to estimate 3D pose it is to be inferred from the 2D pose estimates using a simple regression strategy. To do so, a mapping from 2D pose to 3D pose is learned using training data; such method has been previously shown effective [29].

Generally, features based on the input (flow data) are computed automatically and are then passed through a previously trained regression forest that computes a segmentation (see step 2).

After step 2 there are two different options.

According to a first embodiment, the image is segmented into object parts based on the optical flow data in **step 3.** After this the process proceeds with step 4.

According to a second option, after step 2 the method proceeds with step 4. In **step 4,** joints between object parts and/or the location of object parts are calculated. In the first embodiment, the calculation in step 4 is based on the segmentation (provided in step 3). In the second embodiment, the calculation in step 4 is solely based on the optical flow data (provided in step 2).

In **step 5** the estimated pose is generated as output O and may be provided to the output interface 21 of the pose estimation unit PE. The output is generated by tracking the movement of the object parts independently of each other.

After having finalized the pose estimation and tracking the object's movement, the method ends. It has to be noted that Shotton et al. do not process and disclose to process the steps 4 and 5.

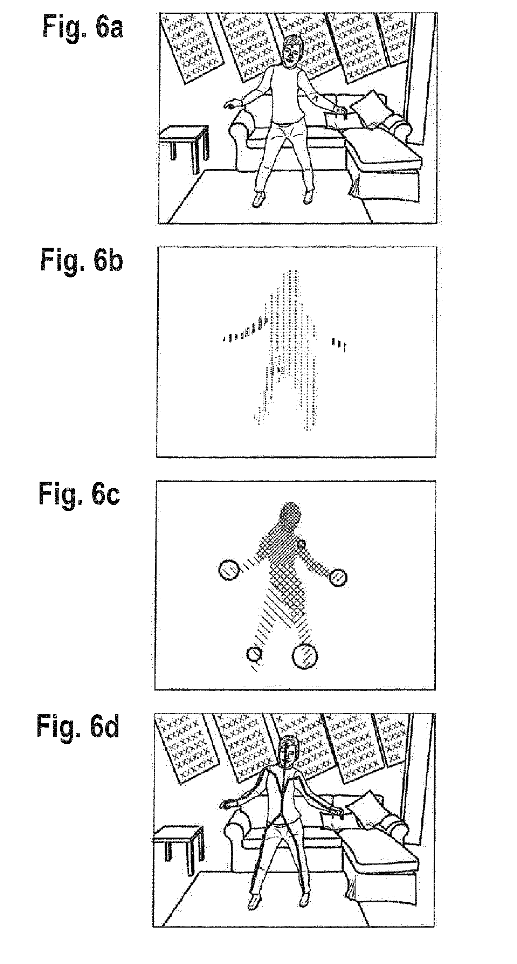

**Figure 6** shows an overview of the output O of the pose estimation method according to the present invention. Figure 6a is a simplified representation of a video sequence shot with a phone camera. Figure 6b represents the optical flow computed with GPU flow [36], where black density represents movement speed and line style represents different movement directions. Figure 6c shows per-pixel part assignments based on flow with overlaid uncertainty ellipses. Figure 6d shows the predicted 2D part centroids.

The present human pose estimation system is based on the fact that optical flow contains much of the same information as range data. If a human observes a sequence of optical flow fields as a video sequence, it is generally easy to understand the action, much like watching a range video. An optical flow field is much like range data in that the effects of appearance are essentially removed. Flow captures information about the overall shape and pose of the body and the boundary between the body and the background **(Fig. 6b).** While the relationship to depth is not as direct as in a range sensor, the flow does contain relevant information: The magnitude of the flow is related to the size, orientation, motion, and depth of the body parts. Flow has an advantage beyond range data: 2D flow also captures the motion of body parts, which is used in pose capture according to the present invention to good effect. Thus, an aspect of the invention has to be seen in a novel approach to use flow data in a hardware implementation: Flow data are used for processing of two different parameters. First, flow is used as a feature that is (when there is flow) informative about the object or body parts, and second, as a feature that is informative for the movement of the parts.

Optical flow has an important disadvantage relative to range data: When a person is stationary flow does not tell us where the person is. It does however tell us something important - that the person is not moving. To take advantage of this, the second component of the method adds a temporal prediction process on top of the body part detections. Preferably, a Kalman filter is used to estimate the locations and velocities of all body parts in 2D. By estimating velocities, it is possible to incorporate information from the optical flow into the Kalman observation model. This improves part estimation when the person is moving as well as when they are stationary. When a person stops moving, the flow is near zero and Kalman filter predicts the body is not moving, resulting in a stable pose estimate. **Figure 6c** shows part estimates and uncertainty ellipses. Of course if the person never moves, it is not possible to estimate their pose, but if they move and stop, it is.

The system produces 2D pose estimates from video that exceed the quality and robustness of existing 2D pose estimation algorithms when people are moving. Such 2D pose estimates alone may be useful for many applications but for many applications further information, like a 3D pose, is required. To that end, a third processing stage that predicts 3D pose from 2D pose is added. Again the training set is used and a simple linear regressor from 2D pose to 3D pose is computed. This simple method, using only flow, cannot compete with range data but the results may be sufficient for many gaming applications.

The resulting system is called FlowCap for optical flow based motion capture. The present approach follows that of Shotton et al. [27] except that range data are replaced with optical flow, and flow is used to enable tracking. Progress on optical flow estimation has been significant in recent years [1] with algorithms achieving reasonable accuracy and speed. By substituting flow for depth, FlowCap opens up many opportunities for pose estimation and motion capture beyond the Kinect system and marketplace. FlowCap does not need to be used alone, but could be used as one source of information in a system integrating multiple cues and/or multiple input devices.

The FlowCap system according to present invention may be applied and was tested by capturing video sequences from the Kinect RGB camera. The body pose estimated from present system was compared with the 2D Kinect output, which in sum compares favorably to Kinect. It has to be pointed out that FlowCap does something Kinect can never do - estimate pose from archival video. Therefore, the method was evaluated on clips from television [11, 25] and visually compared 2D pose estimates to ground truth and a state-of the-art single-frame method [39]. Additionally the system was tested on hand-held cell-phone video and video captured by Kinect outdoors.

Generally, there are several differences between optical flow and depth images that affect the design of the training set. First, the same body pose at time t, executed with different velocities, will result in two different flow fields. Consequently, the training data must cover a range of both poses and velocities. Second, camera motions change the observed flow. While we robustly estimate and remove camera motion (described below), it is assumed that there will be some residual camera motion and consequently build this into the training set to improve robustness. Third, optical flow computed on real images is not perfect and can be affected by lighting, shadows, and image texture (or lack thereof). It is necessary to realistically model this noise. To do so, pairs of frames with varied foreground and background texture, and various types of noise are synthesized, and then a flow algorithm is run to compute the optical flow.

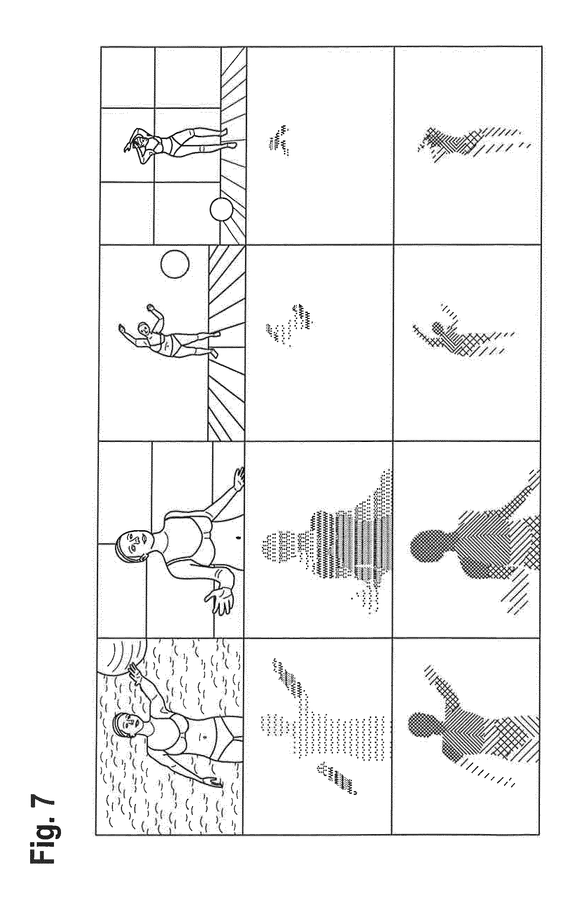

In this section it is described how the training dataset contains realistic human bodies in varying home environments performing a variety of movements. An example training data is shown in **Fig. 7** depicting a simplified representation of example synthetic frames from pairs of training frames created with a state-of-the-art body model as in [20]. In the middle row, there is a representation of estimated optical flow for each image frame and in the bottom row there is depicted ground truth body part segmentation (wherein ground truth refers to a statistical evaluation of the accuracy of the training data set).

**Body shape variation**. A 3D body model is used as in [20], created from the registered 3D scans of thousands of people. This model allows the generation of 3D human bodies with realistic shapes in arbitrary poses. Half the body shapes are those of people in the shape training set and half are sampled randomly within one standard deviation from the mean shape. Separate shape models are used for men and women.

Here, a body shape representing people in tight clothing is used. Of course according to other embodiments the models could be dressed in synthetic clothing and hair may be added to for realism.

As in [27], the body model is segmented into parts, which are color coded for visualization (Fig. 7 bottom). The training data includes the 2D projection of these part segments. It is to be noted that this approach uses fewer and larger parts than [27]; these provide more reliable part detection but complicate the localization of joints.

Body pose variation: To capture a wide range of human poses and motions, training pairs of poses that represent humanly possible movements between two frames need to be generated. To do so, we captured 3D scans of people in a wide variety of poses. Sampling pairs of poses and generated paths between them in pose space. Then we sampled points along these paths.

**Appearance variation**. The performance of optical flow methods is affected by image texture and contrast. For example, when the background is homogeneous or the foreground and background have a similar color, the estimated optical flow field may be overly smoothed, blurring the foreground motion with the background motion. These effects should be present in the dataset to be able to successfully estimate the human pose under these conditions; this can be clearly seen in Fig. 7.

High resolution texture maps from 3D scans of over 30 subjects are created. For each body shape, we randomly selected a texture map and rendered the body in a basic 3D environment composed by a wall and a floor. Additional 3D content has been introduced in the environment to simulate scene structure and independently moving objects in the scene. The dataset contains both plain colored walls and floors, as well as real wall and floor textures. To increase realism, we crudely approximate bounced light by illuminating the scene with light colored according to the background color. Also we smoothed the images with Gaussian kernels of random size to simulate optical blur. Finally, random Gaussian noise of small variance has been added.

**Flow computation**. Flow algorithms have different trade-offs between accuracy and speed. Efficiency is important both for run time performance and for generating large amounts of training data. At the time of writing, MDPflow2 [37] leads different flow benchmarks like Middlebury [1] and Sintel [9]. However, its execution time (around 10 minutes per 640x480 image) is prohibitive for the creation of large databases (more than 60 days of computation for a database of 10000 images). A very fast alternative consists in training the system with synthetic flow computed from the synthetic motion. Despite being extremely fast, flow computed in this way lacks realistic flow imperfections present in real flow. Consequently, the GPUflow method [36] is used in the preferred embodiment. While it is not the most accurate method, it produces reasonable results at 3 seconds per frame on a GPU.

**Scale variation.** Range data, provides a valuable notion of the scale of the scene. Shotton et al. [27] achieve scale invariance by computing features in a window of size variable with respect to the depth. Unfortunately, flow fields do not provide an easy way to estimate scale. Considering two different scenarios and create two separate training sets where the size of the person in the screen varies substantially (Fig. 7 left and right). The first (Fig. 7 left) captures upper body movement common in archival video like TV sitcoms. The second (Fig. 7 right) captures the full body and is aimed at game applications like in [27]. Within each scale category to generate training samples with a range of scales to provide some scale invariance.

**Training data summary.** The upper body dataset is composed of approximately 7, 000 training examples, while the full body dataset has approximately 14, 000. Each training example includes the flow, 2D segmentation, 2D part centroids, and the 3D pose information.

**The Method**

The goal of the system is to estimate the pose of a human body from a series of images. As in [27], two subproblems are considered: a classification problem of assigning a body part identifier to each pixel, and a regression problem of inferring the position of the body joints.

**Problem definition**

The input consists of a sequence of k + 1 images Yi of dimensions m $\times$ n. For each image Yi, the optical flow field Vi between Yi and Yi+1 was estimated using the method in [36]. To reduce the effect of camera motion we also robustly estimate a dominant global homography for the image pair using RANSAC. Let the flow field at every pixel, given by the homography, be Hi. Then we define the residual flow field to be $\hat{V}_i = V_i - H_i$.

For every residual flow field, $\hat{V}_i$, our goal is to estimate the 2D locations of j joints, Xi, of size j $\times$ 2; like [27], to use body part assignments to p parts as an intermediary between observables and joint locations. This is achieved in three steps. First, per-pixel body part assignments are estimated with a matrix Li of size m $\times$ n $\times$ p + 1 containing the probability of each label l $\in$ O...p + 1 at each location; labels correspond to either one of p body parts or the background. Second, we compute a matrix Mi of size p $\times$ 2 containing the 2D centroids of the body parts in the image. Finally, the matrix, Xi, of 2D joint locations is predicted from Mi using linear regression.

**Flow difference features**

Let x = (x, y) be an image pixel location. Following [27], each pixel is described by a t dimensional feature vector Fi(x). Here by taking Fi(x) to include the flow magnitude $\hat{V}_i$(**x**) at the pixel and a set of t-1 flow differences $//\hat{V}_i(\mathbf{x})-\hat{V}_i (x + \delta_x, y + \delta_y)//$,, computed with random surrounding pixels. The maximum displacements, $\delta x$, $\delta y$ are set to 160 pixels for the full body training set and 400 pixels for the upper body one. T = 200 is chosen and the samples $\delta x$, $\delta y$ from a Gaussian distribution are drawn.

**Body part classification**

The method proceeds to classify each feature vector, Fi(x), at each pixel into one of p + 1 classes representing the p body parts and the background. Randomized decision forests (implementation from [23]) are used for classifying flow difference features. For each training example described above

(section "data"), we randomly sample 2000 pixel locations and use the associated feature vectors to train the decision forest classifier. Six trees were trained with maximum depth set automatically so that leaves contain a minimum of four samples. The output of the decision forest is a matrix of Pi of dimensions mxnx(p+1) containing the part probabilities at each pixel. The label matrix Li is simply computed as Li(**x**) = arg max$_l$ Pi(**x**, l).

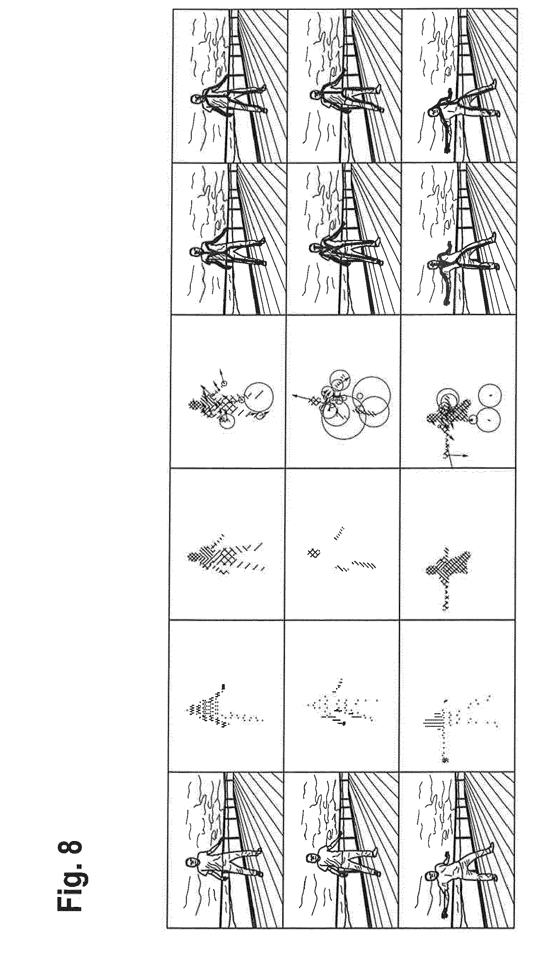

Obviously, when there is no motion, the classification, Li, is ambiguous; row 2 in Fig.8. A static pixel surrounded by static pixels is classified as background. However, the lack of motion is a strong, complementary feature that to can exploit in a tracking scheme.

According to a preferred embodiment, optical flow is used in two ways: first, as a static, appearance invariant feature used for per-frame pose estimation, and second, as an observation of the pixel velocities for effective part tracking.

**Part centroid tracking**

The part classification per pixel can now be used to track the part positions. One approach would estimate the 2D centroid $M_i^{'}(k)$ of each body part I a weighted average of the probabilities in Pi. However, such means are often biased towards center of the body, and the modes are better indicators of body part position. We approximate the mode by

$$\hat{M}_i(l) = \frac{\sum_x P_i(x,l)^{\alpha}(x)}{\sum_x P_i(x,l)^{\alpha}}$$

(Equation 1)

where $\alpha = 6$ in the experiments.

When there is no movement, the modes can be very inaccurate. To address this temporal tracking of these centroids using a linear Kalman filter [35] is performed. Tracking is performed independently for each part centroid. The state of the filter contains the estimation of the position and velocity of each part centroid $M_i(l), M_i^{'}(l)$. The measurements are the centroid estimates, $\hat{M}_i(l)$, and the velocities $M_i^{'}(l)$, which we compute from the optical flow in a region around the current estimate. Since we are directly observing estimations of our state, the observation model is an identity matrix. The state transition model is obvious for the position, and assumes constant velocity:

$$M_i(l) = M_{i-1}(l) + M_{i-1}^{'}(l)$$
$$M_i^{'}(l) = M_{i-1}^{'}(l)$$

(Equations 2 and 3)

The definition of the process and measurement noise is not so straight-forward. The transition model for positions is fairly accurate, while its velocity component is inaccurate and part-dependent. We empirically set values according to this intuition. The velocity component of the measurement noise is related with the accuracy of the flow method, and it is set empirically as well. The position component of the measurement noise $Q_i^{M}$ depends on the accuracy of the decision forest estimation. To make this noise dependent on the per-part probability matrix Pi as follows

$$Q_i^{M}(l) = \frac{k}{\sum_{x} P_i(x,l)^2} \quad \text{(Equation 4)}$$

where k is a part-dependent constant.

The filtering stage results in a stable estimation of the body part centroids, $M_i$. The relation between part centroids and joint locations is learned from the training dataset described above. The training data is used to fit a linear regression with elastic net.

**Joint Prediction in 2D**

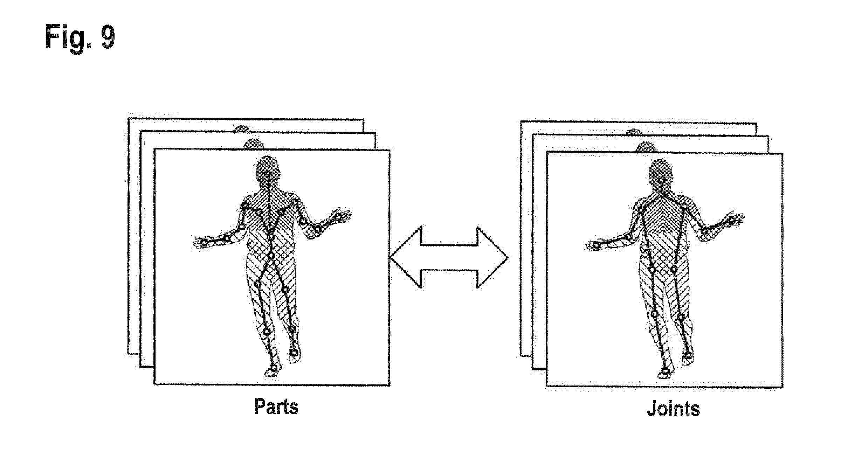

Many applications depend on joint locations instead of part locations. To enable joint location prediction, our synthetic training data was augmented to include projected part centroids and projected joint locations. The latter was obtained by projecting a 3D joint location manually defined as a linear combination of template vertices. From this, we learned a linear mapping $R_X$ of size j×p from centroids M to joints $\hat{X}$, as shown in in Fig. 9, using a cross-validated version of Elastic Net:

$$\hat{X}_i = R_X \hat{M}_i$$

(equation 5)

**Figure 9** shows a 2D joint regression training. A linear relationship was learned between projected part centroids and projected joint positions.

Better methods could include more flexible nonlinear regressors, or regressors informed more directly by the image data (such as [27]).

**Joint Prediction in 3D**

Because depth is highly nonlinear with projected centroid positions, and ambiguous, regressing to 3D requires careful modeling. The synthetic training data was augmented to include the pose parameters for the parametric body model used to synthesize images. The use of the body model ensures preservation of useful invariants (like limb lengths). To encourage translation and scale independence, to trained from normalized, mean-centered part centroids $\overline{M}_i$ :

$$\overline{M}_i = \frac{\overline{M}_i - \mu_p(\overline{M}_i)}{\sigma_p(\overline{M}_i)} \quad \text{(Equation 6)}$$

We then regressed from $\overline{M}_i$ to the pose parameters of the body model $\hat{Y}_i$. The linear mapping Ry is of size (z × 2p), where z denotes the number of pose parameters in our body model, and the additive offset $Y_0$ is also learned:

$$\hat{Y}_i = R_Y vec(\overline{M}_i) + Y_0 \quad \text{(Equation 7)}$$

Finally, the skeleton implied by the body model is fit to the image-space with the use of RANSAC [16]. While the preferred embodiment uses a simple linear regression method, it should be understood that better results could be obtained using a mixture of linear regressors, piecewise linear regression, support vector regression, or other non-linear mapping methods.

**Experiments**

In this section results are provided that illustrate two main points. First, the system can provide good 2D pose in applications where Kinect usage is either impractical, such as outdoor scenes or hand-held phone recordings, or impossible, such as archive video. Second, the system compares favorably against a state-of-the-art human pose estimation system such as [39] in selected types of actions.

While Kinect works well indoors, we captured a sequence outside as shown in **Fig. 8** in a simplified representation of real photographs (in the 1st and left column and in the 5th and 6th column from left to right). In figure 8 from left to right: in the 1st column: image capture with Kinect RGB camera, in the 2nd column: optical flow, in the 3rd column: per pixel part labels, in the 4th column: part centers with uncertainty (circles) and motion vectors (10x actual magnitude), in the 5th column: estimated kinematic structure of the part centers, and in the last and 6th column: predicted Kinect kinematic structure using linear regression.

In this situation, the natural lighting caused the Kinect pose estimation to fail on almost every frame of the sequence. In contrast, despite the heavy wind and the slightly dynamic background, FlowCap recovers qualitatively good 2D pose.

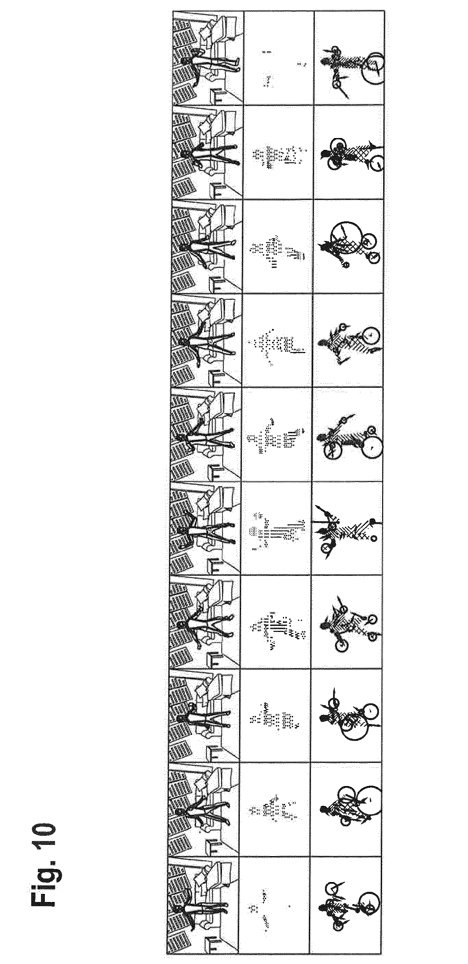

Using Kinect requires a computer and a power socket nearby; it is not a very portable system. However, almost every phone is equipped with a camera from which to capture video. **Figure 10** shows a smartphone based pose estimation according to the FlowCap method described herein. Here the video is captured using a hand-held phone camera and is represented in Figure 10 in the first line (an indoor scene). This results in overall flow due to rotation and translation of the camera (2nd line). Despite this, part estimates remain good and pose is well estimated (3rd line). In Fig. 10 you can see results of the system run on images from a hand-held Samsung Nexus S mobile phone. Despite the camera-motion removal step described above under the topic "problem definition", residual background flow is observable in the sequence. Nonetheless, the estimated 2D poses are quite good. According to a preferred embodiment, the present software is not designed to actually run on a phone and all processing is done off-line on a server. However, according to another embodiment the software may also run on a mobile device.

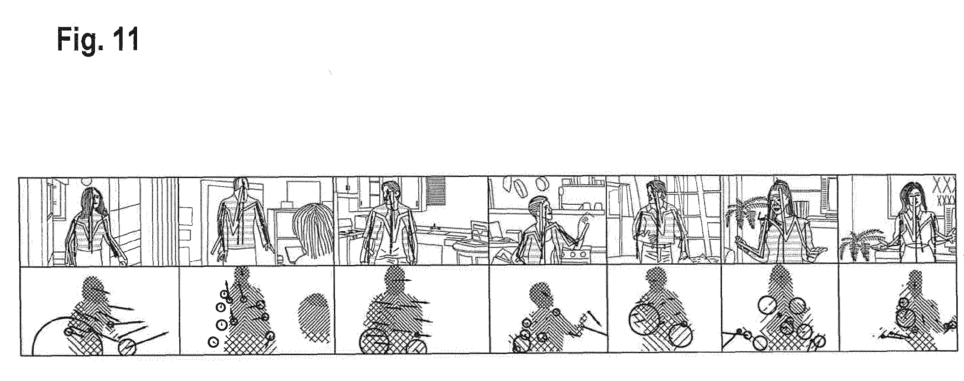

A huge amount of data on the Internet is now in the form of video. The Kinect system is obviously not applicable for this input. **Figure 11** shows preliminary results (see in Figure 11: white thick lines in the first row) on archival data such as a TV series. Ground truth shown in thick white lines, [39] in dashed black lines and the proposed system in continuous black lines. This type of data is particularly challenging due to aspects not modeled yet in the system such as switching cameras, multiple people, or non-human movement. Results on videos with a mostly-frontal view of single person movement are promising.

Living room scenes are the best terrain for the Kinect system. Their results are so good in these conditions that can be treated as ground-truth for comparison with other image-based system. This test is by no means extensive or definitive in declaring that our system is better than [39]. However, the usage of complementary sources of information by the system results in a boost in performance in specific situation for rapidly moving parts such as hands or elbows. It is also worth mentioning that the system shows a consistent bias in the feet (it tends to estimate short legs) due to the usual lack of motion there. Learning this bias should improve our results and is part of our future work. It is worth mentioning that the system running time is around 5 seconds per frame right now, being the bottleneck the computation of the optical flow.

**Discussion**

It has been demonstrated how optical flow alone can provide useful information for human pose estimation. Like range data, it can factor the variations in image appearance and additionally gives information about the motion of body parts. By having also demonstrated how flow can be used to detect and track human pose in monocular videos such as television shows. The 2D predictions are surprisingly good in a range of complex videos. Because no special hardware is required, this technology opens up the possibility or more widespread automatic video pose annotation. Early optical flow algorithms were sufficiently unreliable that they could not serve as input for human pose estimation. Recent advances however have led to increased accuracy and robustness as evidenced by public datasets and evaluations [1, 9, 17]. There is a tradeoff, however, between accuracy and speed. Here the favor speed and use a GPU implementation [36].

The current implementation is not a real-time system although each of the pieces easily could be real time. It is shown in [27] that the random decision forest providing per-pixel classification can perform in super-realtime. That makes flow estimation the largest bottleneck, although realtime implementations exist (e.g. for video codecs and even in television sets for converting 2D to 3D). The current implementation is a proof of concept. Another essential aspect, however, refers to engineering a real-time system.

While only optical flow is used as input, of course, additional 2D image cues may be included. Head, feet, and hand detectors could readily be incorporated as, for that matter, depth data from a range sensor or stereo system. Alternatively, FlowCap could be used as a complementary source of information for other pose estimation and tracking methods. For example, it is possible to use the present system FlowCap according to the invention to initialize more precise model-based trackers. In addition to providing pose, an initial segmentation of the image into regions corresponding to parts is provided. This evidence could readily be incorporated into existing 2D pose trackers.

Finally, early work focused on using optical flow to track and recognize facial expressions [4, 12], which are arguably simpler than full articulated body pose. The system may be used to recover virtual facial makers or expression parameters, enabling single camera control of a face avatar.

Generally, the method according to the invention may be executed on an image acquisition device and/or on one single computer or on several computers that are linked over a network. The computers may be general purpose computing devices in the form a conventional computer, including a processing unit, a system memory, and a system bus that couples various system components including system memory to the processing unit. The system bus may be any one of several types of bus structures including a memory bus or a memory controller, a peripheral bus and a local bus using any of a variety of bus architectures, possibly such which will be used in image processing system environments. The system memory includes read-only memory (ROM) and random access memories (RAM). A basic input/output system (BIOS), containing the basic routines that have the functionality to transfer information between elements within the computer, such as during start-up, may be stored in one memory. Additionally, the computer may also include hard disc drives and other interfaces for user interaction. The drives and their associated computer-readable media provide non-volatile or volatile storage of computer executable instructions, data structures, program modules and related data items. A user interface may be a keyboard, a pointing device or other input devices (not shown in the figures), such as a microphone, a joystick, a mouse. Additionally, interfaces to other systems might be used, such as an interface to a database or a central server. These and other input devices are often connected to the processing unit through a serial port interface coupled to system bus. Other interfaces include a universal serial bus (USB). Moreover, a monitor or another display device is also connected to the computers of the system via an interface, such as video adapter. In addition to the monitor, the computers typically include other peripheral output or input devices (not shown), such as speakers and printers or interfaces for data exchange. Local and remote computer are coupled to each other by logical and physical connections, which may include a server, a router, a network interface, a peer device or other common network nodes. The connections might be local area network connections (LAN) and wide area network connections (WAN) which could be used within intranet or internet. Additionally networking environment typically includes a modem, a wireless link or any other means for establishing communications over the network.

Moreover, the network typically comprises means for data retrieval, particularly for accessing data storage means like archives, memories, repositories and the like. Network data exchange may be coupled means of the use of proxies and other servers.

It has to be pointed out that the method changes and transforms physical subject matter. Images are generated and stored differently, namely with predicted pose. Further, the physical architecture of the acquisition device has been changed compared to normal acquisition devices or cameras, as they comprise the pose estimation unit PE.

References:

[1] S. Baker, D. Scharstein, J. P. Lewis, S. Roth, M. J. Black, and R. Szeliski. A database and evaluation methodology for optical flow. International Journal of Computer Vision, 92(1):1-31, March 2011. 2, 4, 6, 8

[2] A. Bissacco, M.-H. Yang, and S. Soatto. Fast human pose estimation using appearance and motion via multi-dimensional boosting regression. In Computer Vision and Pattern Recognition, 2007. CVPR '07. IEEE Conference on, pages 1-8, 2007. 3

[3] M. J. Black. Explaining optical flow events with parameterized spatio-temporal models. In IEEE Proc. Computer Vision and Pattern Recognition, CVPR'99, pages 326-332, Fort Collins, CO, 1999. IEEE. 3

[4] M. J. Black and Y. Yacoob. Recognizing facial expressions in image sequences using local parameterized 9 models of image motion. Int. Journal of Computer Vision, 25(1):23-48, 1997. 3, 9

[5] A. Bobick and J. Davis. Real-time recognition of activity using temporal templates. In IEEE Workshop on Applications of Computer Vision, pages 39-42, Dec. 1996. 3

[6] C. Bregler and J. Malik. Tracking people with twists and exponential maps. In CVPR, pages 8-15, 1998. 3

[7] T. Brox, B. Rosenhahn, and D. Cremers. Contours, optic flow, and prior knowledge: Cues for capturing 3D human motion in videos. In B. Rosenhahn, R. Klette, and D. Metaxas, editors, Human Motion, volume 36 of Computational Imaging and Vision, pages 265-293. Springer Netherlands, 2008. 3

[8] M. Brubaker and D. Fleet. The kneed walker for human pose tracking. In CVPR, pages 1-8, 2008. 3

[9] D. J. Butler, J. Wulff, G. B. Stanley, and M. J. Black. A naturalistic open source movie for optical flow evaluation. In A. Fitzgibbon et al. (Eds.), editor, European Conf. on Computer Vision (ECCV), Part IV, LNCS 7577, pages 611-625. Springer-Verlag, oct 2012. 4, 8

[10] A. A. Efros, A. C. Berg, G. Mori, and J. Malik. Recognizing action at a distance. In IEEE International Conference on Computer Vision, pages 726-733, Nice, France, 2003. 3

[11] M. Eichner, M. Marin-Jimenez, A. Zisserman, and V. Ferrari. 2D articulated human pose estimation and retrieval in (almost) unconstrained still images. International Journal of Computer Vision, 99:190-214, 2012. 1, 2

[12] I. Essa and A. Pentland. Coding, analysis, interpretation, and recognition of facial expressions. IEEE Transactions on Pattern Analysis and Machine Intelligence (PAMI), 19(7):757-763, 1997. 3, 9

[13] R. Fablet and M. J. Black. Automatic detection and tracking of human motion with a view-based representation. In A. Heyden, G. Sparr, M. Nielsen, and P. Johansen, editors, European Conf. on Computer Vision, ECCV 2002, volume 1 of LNCS 2353, pages 476-491. Springer-Verlag, 2002. 3

[14] P. Felzenszwalb, R. Girshick, and D. McAllester. Cascade object detection with deformable part models. In Computer Vision and Pattern Recognition (CVPR), 2010 IEEE Conference on, pages 2241-2248, 2010. 1

[15] V. Ferrari, M. Marin-Jiminez, and A. Zisserman. Progressive search space reduction for human pose estimation. In CVPR, pages 1-8, 2008. 1

[16] M. A. Fischler and R. C. Bolles. Random sample consensus: a paradigm for model fitting with applications to image analysis and automated cartography. Commun. ACM, 24(6):381-395, June 1981. 6

[17] A. Geiger, P. Lenz, and R. Urtasun. Are we ready for autonomous driving? The KITTI vision benchmark suite. In IEEE International Conference on Computer Vision and Pattern Recognition, pages 3354-3361, Providence, USA, 2012. 8

[18] M. A. Giese and P. T. Neural mechanisms for the recognition of biological movements and action. Nature Reviews Neuroscience, 4:179-192, 01 2003. 3

[19] P. Guan, L. Reiss, D. Hirshberg, A. Weiss, and M. J. Black. DRAPE: DRessing Any PErson. ACM Trans. on Graphics (Proc. SIGGRAPH), 31(4):35:1-35:10, July 2012. 9

[20] D. Hirshberg, M. Loper, E. Rachlin, and M. Black. Coregistration: Simultaneous alignment and modeling of articulated 3D shape. In A. F. et al. (Eds.), editor, European Conf. on Computer Vision (ECCV), LNCS 7577, Part IV, pages 242-255. Springer-Verlag, Oct. 2012. 3

[21] Z. Jiang, Z. Lin, and L. S. Davis. Class consistent k-means: Application to face and action recognition. Computer Vision and Image Understanding, 116(6):730 - 741, 2012. 3

[22] S. X. Ju, M. J. Black, and Y. Yacoob. Cardboard people: A parameterized model of articulated motion. In IEEE Int. Conf. Automatic Face and Gesture Recognition, pages 38-44, Killington, Vermont, 1996. 3

[23] F. Pedregosa, G. Varoquaux, A. Gramfort, V. Michel, B. Thirion, O. Grisel, M. Blondel, P. Prettenhofer, R. Weiss, V. Dubourg, J. Vanderplas, A. Passos, D. Cournapeau, M. Brucher, M. Perrot, and E. Duchesnay. Scikit-learn: Machine learning in Python. Journal of Machine Learning Research, 12:2825-2830, 2011. 5

[24] R. Polana and R. C. Nelson. Detection and recognition of periodic, non-rigid motion. International Journal of Computer Vision, 23(3):261-282, June/July 1997. 3

[25] B. Sapp, D. Weiss, and B. Taskar. Parsing human motion with stretchable models. In CVPR, pages 1281-1288, 2011. 1, 2

[26] L. Schwarz, A. Mkhitaryan, D. Mateus, and N. Navab. Estimating human 3D pose from time-of-flight images based on geodesic distances and optical flow. In Automatic Face Gesture Recognition and Workshops (FG 2011), 2011 IEEE International Conference on, pages 700-706, 2011. 3

[27] J. Shotton, R. Girshick, A. Fitzgibbon, T. Sharp, M. Cook, M. Finocchio, R. Moore, P. Kohli, A. Criminisi, A. Kipman, and A. Blake. Efficient human pose 10 estimation from single depth images. Pattern Analysis and Machine Intelligence, IEEE Transactions on, PP(99):1-1, 2012. 1, 2, 4, 5, 6, 7, 8

[28] H. Sidenbladh, M. J. Black, , and D. Fleet. Stochastic tracking of 3D human figures using 2D image motion. In European Conference on Computer Vision, ECCV, LNCS 1843, pages 702-718. Springer Verlag, June 2000. 3

[29] L. Sigal and M. J. Black. Predicting 3D people from 2D pictures. In LNCS vol. 4069, Proc. IV Conf. on Articulated Motion and Deformable Objects (AMDO), pages 185-195, July 2006. 3

[30] C. Sminchisescu and B. Triggs. Estimating articulated human motion with covariance scaled sampling. International Journal of Robotics Research, 22:1-21, 2003. 3

[31] D. Sun, E. B. Sudderth, and M. J. Black. Layered segmentation and optical flow estimation over time. In IEEE International Conference on Computer Vision and Pattern Recognition, pages 1768-1775, 2012. 9

[32] S. Wachter and H. H. Nagel. Tracking persons in monocular image sequences. CVIU, 74(3):174-192, 1999. 3

[33] H. Wang, A. Kläser, C. Schmid, and C.-L. Liu. Dense trajectories and motion boundary descriptors for action recognition. IJCV, on-line, 2013. 3

[34] A. Weiss, D. Hirshberg, and M. Black. Home 3D body scans from noisy image and range data. In Int. Conf. on Computer Vision (ICCV), pages 1951-1958, Barcelona, Nov. 2011. IEEE. 9

[35] G. Welch and G. Bishop. An introduction to the kalman filter. In Technical Report, 1995. 5

[36] M. Werlberger, T. Pock, and H. Bischof. Motion estimation with non-local total variation regularization. In IEEE International Conference on Computer Vision and Pattern Recognition, pages 2464-2471, 2010. 1, 4, 8

[37] L. Xu, J. Jia, and Y. Matsushita. Motion detail preserving optical flow estimation. IEEE Transaction on Pattern Analysis Machine Intelligence, 34(9):1744-1757, September 2012. 4, 9

[38] Y. Yacoob and L. Davis. Learned temporal models of image motion. In ICCV, pages 446-453, 1998. 3 [39] Y. Yang and D. Ramanan. Articulated pose estimation using flexible mixtures of parts. In CVPR, pages 3546-3553, 2011. 1, 2, 6, 7, 8

[40] S. Zuffi, O. Freifeld, and M. J. Black. From pictorial structures to deformable structures. In CVPR, pages 3546-3553, 2012. 1 11

## Claims

1. A method for automatically estimating a pose of a multi-part object from successive frames of an image sequence or a video, comprising the steps of:

   - Providing (1) the image data sequence containing the multi-part object
   - Computing optical flow data (2) for the provided image data sequence
   - Computing a segmentation (3) of an image into object parts based on the optical flow data
   - Detecting (4) joints between object parts and/or the location of object parts from the segmentation
   - Estimating the pose of the multi-part object (5) by tracking movement of the object parts.

2. A method for automatically estimating a pose of a multi-part object from successive frames of an image sequence or a video, comprising the steps of:

   - Providing (1) the image data sequence containing the multi-part object
   - Computing optical flow data (2) for the provided image data sequence
   - Directly estimating joints and/or object part locations from the optical flow data
   - Estimating the pose of the multi-part object (5) by tracking movement of the object parts.

3. The method according to claim 1 or 2, wherein the segmentation is probabilistic.

4. The method according to any of the claims above, wherein the segmentation is computed independently for every pixel, based on their pixel neighborhood.

5. The method according to any of the claims above, wherein the segmentation is computed using a regression forest.

6. The method according to any of the claims above, wherein in addition to computing the segmentation using optical flow, the segmentation uses a plurality of features such as image color, texture, and depth.

7. The method according to any of the claims above, wherein tracking uses the optical flow associated with the object parts to predict their motion.

8. The method according to any of the claims above, wherein tracking uses a temporal filter to smooth the estimated motions.

9. The method according to claim 8, wherein the temporal filter is a Kalman filter.

10. The method according to any of the claims above, wherein the locations of the joints or the object parts are represented in 3D.

11. The method according to claims 1 to 9, wherein the locations of the joints or the object parts are represented in 2D.

12. The method according to any of the method claims above,
wherein a 3D model is used to create training data for the segmentation.

13. The method according to any of the method claims above,
wherein a 3D model is used to create training data for detecting joints or part locations.

14. The method according to any of the method claims above,
wherein optical flow is computed in real time or offline.

15. The method according to any of the method claims above, wherein tracking position of each object part is performed by computing a matrix containing 2D centroids of the object parts in the image and tracking is performed independently for each object part centroid.

16. The method according to any of the method claims above, wherein tracking the movement of each object part exploits the object part probabilities from a probabilistic segmentation of the image.

17. The method according to any of the method claims above, wherein the method further comprises the step of:

- Estimating the object's 3D pose based on the estimated 2D pose by using a 3D training dataset.

18. The method according to any of the method claims above, wherein the image data sequence is provided from an archive (DB).

19. The method according to any of the method claims above, wherein the method comprises:

- Assigning each pixel in the image to one of the categories "object" or "background".

20. The method according to any of the method claims above, wherein an initial segmentation of a scene in the image into object and background is provided together with the image data sequence.

21. The method according to any of the method claims above, wherein the object to be tracked is an articulated object or one or multiple human bodies.

22. The method according to any of the method claims above,
wherein the object to be tracked is an articulated object or one or multiple human hands.

23. The method according to any of the method claims above,
wherein the object to be tracked is an articulated object or one or multiple human faces.

24. A mobile device (10, M) with an electronic module (PE), wherein the electronic module is adapted to execute the method according to any of the method claims above.

16

25. An electronic module (PE) for automatically estimating a pose of an object from successive frames of an image sequence or a video, comprising:

- An input interface (11) to a camera (10) for providing an image data sequence containing the object
- A pose estimation unit (CU), which is adapted to compute optical flow data for the provided image data sequence
- A part detector (PD), which is adapted to segment the image into a set of object parts and detect joints between respective object parts or detect the part locations based on the optical flow data provided by the pose estimation unit (CU)
- An estimator (E), which is adapted for estimating the object's pose by tracking movement of each object part of the set of parts using the optical flow of the respective part
- An output interface (21) for providing an output (O).

26. The electronic module (PE) according to claim 25, wherein the electronic module (PE) is comprised in a mobile device, particularly in a mobile phone, with a camera (10).

27. A computer readable medium including program instructions which when executed by a processor of a computer system cause the processor to perform the method for estimating a pose of an object from successive frames of an image sequence or a video, according to one of the method claims above.

# Fig. 1

# Fig. 2

## Fig. 3

## Fig. 4

# Fig. 5

**Fig. 6a**

**Fig. 6b**

**Fig. 6c**

**Fig. 6d**

Fig. 7

Fig. 8

Fig. 9

Joints

Parts

Fig. 10

Fig. 11

Application Number

EP 13 18 1662

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BENJAMIN SAPP ET AL: "Parsing human motion with stretchable models", COMPUTER VISION AND PATTERN RECOGNITION (CVPR), 2011 IEEE CONFERENCE ON, IEEE, 20 June 2011 (2011-06-20), pages 1281-1288, XP032038109, DOI: 10.1109/CVPR.2011.5995607 ISBN: 978-1-4577-0394-2 | 1-4,6-9, 11,14, 19-25,27 | INV. G06T7/20 G06K9/00 |
| Y | * abstract * * page 1285, section 3.1 * * page 1283, column 1, paragraph 2 * * page 1287, column 1, paragraph 5 * ----- | 5,10,12, 13, 15-18,26 | |
| Y | GABRIELE FANELLI ET AL: "Real time head pose estimation with random regression forests", COMPUTER VISION AND PATTERN RECOGNITION (CVPR), 2011 IEEE CONFERENCE ON, IEEE, 20 June 2011 (2011-06-20), pages 617-624, XP032037960, DOI: 10.1109/CVPR.2011.5995458 ISBN: 978-1-4577-0394-2 * abstract * ----- -/-- | 5 | |

TECHNICAL FIELDS
SEARCHED (IPC)

G06T
G06K

The present search report has been drawn up for all claims

| Place of search | Date of completion of the search | Examiner |
|---|---|---|
| Munich | 19 February 2014 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EUROPEAN SEARCH REPORT

Application Number

EP 13 18 1662

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ALEXANDRU O BALAN ET AL: "Detailed Human Shape and Pose from Images", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, June 2007 (2007-06), pages 1-8, XP031114570, ISBN: 978-1-4244-1179-5 * abstract * * page 1, column 2, paragraph 2 * * page 3, column 2, last paragraph - page 4, column 1, paragraph 1 * * page 4, clumn 2, section 4, paragraph 2 * * p.2, section 3.2 * | 10,12, 13,15-18 | |
| Y | NEVATIA R ET AL: "Tracking Multiple Humans in Complex Situations", PATTERN ANALYSIS AND MACHINE INTELLIGENCE, IEEE TRANSACTIONS ON, IEEE SERVICE CENTER, LOS ALAMITOS, CA, US, vol. 26, no. 9, September 2004 (2004-09), pages 1208-1221, XP011115616, ISSN: 0162-8828, DOI: 10.1109/TPAMI.2004.73 * abstract * * page 1209, column 1, paragraph 2 * | 26 | TECHNICAL FIELDS SEARCHED (IPC) |

The present search report has been drawn up for all claims

| Place of search | Date of completion of the search | Examiner |
|---|---|---|
| Munich | 19 February 2014 | Turina, Andreas |

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Non-patent literature cited in the description

- **S. BAKER ; D. SCHARSTEIN ; J. LEWIS ; S. ROTH ; M. BLACK ; R. SZELISKI.** A database and evaluation methodology for optical flow. *International Journal of Computer Vision,* 2011, vol. 92 (1), 1-31
- **S. BAKER ; D. SCHARSTEIN ; J. P. LEWIS ; S. ROTH ; M. J. BLACK ; R. SZELISKI.** A database and evaluation methodology for optical flow. *International Journal of Computer Vision,* March 2011, vol. 92 (1), 1-31
- **A. BISSACCO ; M.-H. YANG ; S. SOATTO.** Fast human pose estimation using appearance and motion via multi-dimensional boosting regression. *Computer Vision and Pattern Recognition, 2007. CVPR '07. IEEE Conference,* 2007, 1-8
- **M. J. BLACK.** Explaining optical flow events with parameterized spatio-temporal models. *IEEE Proc. Computer Vision and Pattern Recognition, CVPR'99,* 1999, 326-332
- **M. J. BLACK ; Y. YACOOB.** Recognizing facial expressions in image sequences using local parameterized 9 models of image motion. *Int. Journal of Computer Vision,* 1997, vol. 25 (1), 23-48
- **A. BOBICK ; J. DAVIS.** Real-time recognition of activity using temporal templates. *IEEE Workshop on Applications of Computer Vision,* December 1996, 39-42
- **C. BREGLER ; J. MALIK.** Tracking people with twists and exponential maps. *CVPR,* 1998, 8-15
- Contours, optic flow, and prior knowledge: Cues for capturing 3D human motion in videos. **T. BROX ; B. ROSENHAHN ; D. CREMERS.** Human Motion, volume 36 of Computational Imaging and Vision. Springer Netherlands, 2008, vol. 36, 265-293
- **M. BRUBAKER ; D. FLEET.** The kneed walker for human pose tracking. *CVPR,* 2008, 1-8
- A naturalistic open source movie for optical flow evaluation. **D. J. BUTLER ; J. WULFF ; G. B. STANLEY ; M. J. BLACK et al.** European Conf. on Computer Vision. Springer-Verlag, October 2010, vol. 7577, 611-625
- **A. A. EFROS ; A. C. BERG ; G. MORI ; J. MALIK.** Recognizing action at a distance. *IEEE International Conference on Computer Vision,* 2003, 726-733

- **M. EICHNER ; M. MARIN-JIMENEZ ; A. ZISSERMAN ; V. FERRARI.** 2D articulated human pose estimation and retrieval in (almost) unconstrained still images. *International Journal of Computer Vision,* 2012, vol. 99, 190-214
- **I. ESSA ; A. PENTLAND.** Coding, analysis, interpretation, and recognition of facial expressions. *IEEE Transactions on Pattern Analysis and Machine Intelligence,* 1997, vol. 19 (7), 757-763
- Automatic detection and tracking of human motion with a view-based representation. **R. FABLET ; M. J. BLACK.** European Conf. on Computer Vision. Springer-Verlag, 2002, vol. 1, 476-491
- **P. FELZENSZWALB ; R. GIRSHICK ; D. MCALLESTER.** Cascade object detection with deformable part models. *Computer Vision and Pattern Recognition (CVPR), 2010 IEEE Conference,* 2010, 2241-2248
- **V. FERRARI ; M. MARIN-JIMINEZ ; A. ZISSERMAN.** Progressive search space reduction for human pose estimation. *CVPR,* 2008, 1-8
- Random sample consensus: a paradigm for model fitting with applications to image analysis and automated cartography. **M. A. FISCHLER ; R. C. BOLLES.** Commun. ACM, June 1981, vol. 24, 381-395
- **A. GEIGER ; P. LENZ ; R. URTASUN.** Are we ready for autonomous driving? The KITTI vision benchmark suite. *IEEE International Conference on Computer Vision and Pattern Recognition,* 2012, 3354-3361
- **M. A. GIESE.** P. T. Neural mechanisms for the recognition of biological movements and action. *Nature Reviews Neuroscience,* January 2003, vol. 4, 179-192
- **P. GUAN ; L. REISS ; D. HIRSHBERG ; A. WEISS ; M. J. BLACK.** DRAPE: DRessing Any PErson. *Proc. SIGGRAPH,* 10 July 2012, vol. 31,35 (4), 1-35
- Coregistration: Simultaneous alignment and modeling of articulated 3D shape. **D. HIRSHBERG ; M. LOPER ; E. RACHLIN ; M. BLACK et al.** European Conf. on Computer Vision. Springer-Verlag, October 2012, 242-255
- **Z. JIANG ; Z. LIN ; L. S. DAVIS.** Class consistent k-means: Application to face and action recognition. *Computer Vision and Image Understanding,* 2012, vol. 116 (6), 730-741

- **S. X. JU ; M. J. BLACK ; Y. YACOOB.** Cardboard people: A parameterized model of articulated motion. *IEEE Int. Conf. Automatic Face and Gesture Recognition,* 1996, 38-44
- **F. PEDREGOSA ; G. VAROQUAUX ; A. GRAMFORT ; V. MICHEL ; B. THIRION ; O. GRISEL ; M. BLONDEL ; P. PRETTENHOFER ; R. WEISS ; V. DUBOURG.** Scikit-learn: Machine learning in Python. *Journal of Machine Learning Research,* 2011, vol. 12, 2825-2830
- **R. POLANA ; R. C. NELSON.** Detection and recognition of periodic, non-rigid motion. *International Journal of Computer Vision,* June 1997, vol. 23 (3), 261-282
- **B. SAPP ; D. WEISS ; B. TASKAR.** Parsing human motion with stretchable models. *CVPR,* 2011, 1281-1288
- **L. SCHWARZ ; A. MKHITARYAN ; D. MATEUS ; N. NAVAB.** Estimating human 3D pose from time-of-flight images based on geodesic distances and optical flow. *Automatic Face Gesture Recognition and Workshops (FG 2011), 2011 IEEE International Conference,* 2011, 700-706
- **J. SHOTTON ; R. GIRSHICK ; A. FITZGIBBON ; T. SHARP ; M. COOK ; M. FINOCCHIO ; R. MOORE ; P. KOHLI ; A. CRIMINISI ; A. KIPMAN.** Efficient human pose 10 estimation from single depth images. Pattern Analysis and Machine Intelligence. *IEEE Transactions,* 2012, vol. 99, 1-1
- Stochastic tracking of 3D human figures using 2D image motion. **H. SIDENBLADH ; M. J. BLACK ; D. FLEET.** European Conference on Computer Vision. Springer Verlag, June 2000, vol. 1843, 702-718
- Predicting 3D people from 2D pictures. **L. SIGAL ; M. J. BLACK.** Proc. IV Conf. on Articulated Motion and Deformable Objects. LNCS, July 2006, vol. 4069, 185-195
- **C. SMINCHISESCU ; B. TRIGGS.** Estimating articulated human motion with covariance scaled sampling. *International Journal of Robotics Research,* 2003, vol. 22, 1-21
- **D. SUN ; E. B. SUDDERTH ; M. J. BLACK.** Layered segmentation and optical flow estimation over time. *IEEE International Conference on Computer Vision and Pattern Recognition,* 2012, 1768-1775
- **S. WACHTER ; H. H. NAGEL.** Tracking persons in monocular image sequences. *CVIU,* 1999, vol. 74 (3), 174-192
- **H. WANG ; A. KLÄSER ; C. SCHMID ; C.-L. LIU.** Dense trajectories and motion boundary descriptors for action recognition. *IJCV, on-line,* 2013
- **A. WEISS ; D. HIRSHBERG ; M. BLACK.** Home 3D body scans from noisy image and range data. *Int. Conf. on Computer Vision,* November 2011, 1951-1958
- **G. WELCH ; G. BISHOP.** An introduction to the kalman filter. *Technical Report,* 1995
- **M. WERLBERGER ; T. POCK ; H. BISCHOF.** Motion estimation with non-local total variation regularization. *IEEE International Conference on Computer Vision and Pattern Recognition,* 2010, 2464-2471
- **L. XU ; J. JIA ; Y. MATSUSHITA.** Motion detail preserving optical flow estimation. *IEEE Transaction on Pattern Analysis Machine Intelligence,* September 2012, vol. 34 (9), 1744-1757
- **Y. YACOOB ; L. DAVIS.** Learned temporal models of image motion. *ICCV,* 1998, 446-453
- **Y. YANG ; D. RAMANAN.** Articulated pose estimation using flexible mixtures of parts. *CVPR,* 2011, 3546-3553
- **S. ZUFFI ; O. FREIFELD ; M. J. BLACK.** From pictorial structures to deformable structures. *CVPR,* 2012, 3546-3553